# EUROPEAN PATENT SPECIFICATION

(11) **EP 4 149 697 B1**
(45) Date of publication and mention of the grant of the patent: **04.03.2026**
(21) Application number: 21725462.2
(22) Date of filing: 06.05.2021
(51) Int. Cl.: B21D 22/28, B21D 51/26, G01B 7/30, G01N 27/9013

(54) **CAN BODYMAKER AND A METHOD OF OPERATING A CAN BODYMAKER TO MITIGATE THE EFFECTS OF TOOL WEAR, DAMAGE AND/OR MISALIGNMENT**
DOSENKÖRPERHERSTELLUNGSVORRICHTUNG UND VERFAHREN ZUM BETRIEB EINER DOSENKÖRPERHERSTELLUNGSVORRICHTUNG ZUR VERRINGERUNG DER AUSWIRKUNGEN VON WERKZEUGVERSCHLEISS, -SCHÄDIGUNG UND/ODER -FEHLAUSRICHTUNG
SURVEILLANCE D'APPAREIL DE FABRICATION DE CORPS DE BOÎTE

(30) Priority: 15.05.2020 GB 202007230
(43) Date of publication of application: 22.03.2023
(60) Divisional application: 26154747.5
(73) Proprietor: Crown Packaging Technology, Inc., Tinley Park, IL 60487-9286 (US)
(72) Inventor: HALSTEAD, Michael, Oxfordshire OX12 9BP (GB); BAILEY, Damien Andrew, Oxfordshire OX12 9BP (GB); EGERTON, Daniel, Oxfordshire OX12 9BP (GB)
(74) Representative: Marks & Clerk LLP
(86) International application number: PCT/EP2021/062064
(87) International publication number: WO 2021/228694

(56) References cited:
- DE-A1- 102012 101 952
- GB-A- 2 552 533
- JP-A- 2019 052 935
- US-A1- 2018 133 770
- US-A1- 2018 281 045

## Description

### Technical Field

The present invention relates to the monitoring of can bodymakers. In particular, it relates to an apparatus and method for monitoring the forces acting on components in a tool pack of a can bodymaker when the can bodymaker is operated.

### Background

In known can bodymakers for the production of thin-walled metal two-piece can bodies by a "drawing and wall-ironing" (DWI) process, metal cups are fed to the bodymaker and carried by a punch on the end of a ram through a series of dies to produce a can body of the desired size and thickness. The series of dies may include a redraw die for reducing the diameter of the cup and lengthening its sidewall, and one or more ironing dies for wall-ironing the cup into a can body. The area or cradle of the bodymaker frame within which the dies are located is known as the "toolpack". The can body carried on the punch may ultimately contact a bottom forming tool or "domer" so as to form a shape such as a dome on the base of the can. An exemplary bodymaker is described in WO9934942.

Can bodymakers are typically operated for extended periods at high speed to produce more than around 300 to 400 can bodies per minute. However, the quality of the can bodies that are produced can vary significantly over time because of changes in, for example: the alignment of the machine components, coolant temperature and flow rate, lubrication of the machine, and/or the quality of the incoming cups (e.g. because of variations in the quality of the metal coil from which the cups are made).

During the DWI process, the metal is subject to loads as the punch forces it through the ironing dies. However, the magnitude and distribution of these loads changes both during the stroke, and from stroke to stroke, leading to variations in the quality of the can bodies produced. For example, frictional forces and general wear will cause the alignment of the ram to vary slightly over time. In addition, a high speed reciprocating ram is generally subject to at least some vibration, due to the impact of the ram on the can body and to the variable "droop" of the ram as it moves from and to its fully-extended position.

As a further example, when the ram carries the can body into contact with the domer, any misalignment can lead to the can body end splitting, particularly if the can body is made from aluminium. If the misalignment is slight, the split (sometimes known as a "smile") may not be immediately visible to the naked eye, and the split may lead to the can bursting once the can body has been filled. This may not occur until the filled can has been purchased.

Poor quality can bodies may lead to wastage and downtime in can production. This may occur, for example, either because the bodymaker itself must be re-aligned or repaired or because other machines further down the production line are adversely affected by the poor quality cans being produced. Unfortunately, the high speed, high volume nature of the can production industry means that lost production time can be very costly for producers.

Traditionally, alignment and re-alignment of bodymakers is a complex and time-consuming process that needs to be carried out laboriously by skilled operators (who are often in short supply) only after serious problems have developed. When setting up a can bodymaker, the ram and its drive components are typically fixed in place on the bodymaker frame. This aligns the axis of the ram with the main axis of the bodymaker. The other components, including for example the redraw and ironing dies and domer, are then aligned with the ram.

US2018/0133770, which forms the basis for the preamble of claim 1, describes a toolpack assembly having sensor plates to measure the temperature of a tool pack forming die and the forces exerted on the forming dies during can production.

GB2552533 describes a radial offset monitor that uses eddy current sensors to detect misalignment of a ram and/or a punch, or a can body held on a punch.

### Summary

According to a first aspect of the present invention there is provided a can bodymaker for producing can bodies from cups. The can bodymaker comprises a ram configured to reciprocate along an axis, a punch mounted on the ram; a tool pack comprising a cradle and a plurality of tools located in the cradle for drawing and ironing a cup mounted on the punch during a forward stroke of the ram. The can bodymaker further comprises a bolster plate fixed to the can bodymaker, an adapter plate fixed to the bolster plate and a stripper assembly fixed to the adapter plate for removing a can body from the punch during a return stroke of the ram and clamping mechanism for biasing the tools against a front face of the adapter plate. The can bodymaker further comprises one or more load cells located in or on the adapter plate and configured to generate an output signal or signals indicative of an axial force exerted on the tools by the cup passing therethrough.

The term "axial force" means a force having a component directed along the axis along which the ram reciprocates.

The can bodymaker may comprise an encoder configured to provide a measurement of the position of the ram at one or more times during each reciprocation. The encoder may be a linear encoder. Alternatively, the encoder may be a rotary encoder configured to be turned by a shaft used to drive the ram.

The one or more the load cells may be piezoelectric load cells.

The one or more load cells may comprise more than one load cell, the load cells being angularly spaced apart from one another equally about the axis.

The can bodymaker may comprise a processor configured to adjust one or more operating parameters of the bodymaker, such as a rate of reciprocation of the ram, in response to the output signal(s).

The adapter plate may be fixed to the bolster plate by one or more preloading bolts, each preloading bolt passing through a respective one of the load cells to secure the load cell between the adapter plate and the bolster plate,

The stripper assembly may comprise a radial offset monitor for detecting misalignment of the ram and/or punch relative to the axis.

The radial offset monitor may comprise a bore configured to allow passage of the punch and ram therethrough and one or more eddy current sensors spaced around the bore.

According to a second aspect of the present invention there is provided a method of operating a can bodymaker to mitigate the effects of tool wear, damage and/or misalignment during production of can bodies. Each can body is formed by pushing a cup mounted on a punch of a ram reciprocating along an axis through tools contained within the cradle of the tool pack of the can bodymaker. The method comprises obtaining, from one or more load cells, output signals indicative of an axial force exerted on the tools by the cup passing therethrough, the load cell(s) being located in or on an adapter plate attached to a bolster plate fixed to the can bodymaker. The output signals are processed to obtain data indicative of one or more of the tools being worn, damaged, and/or misaligned with respect to the ram. One or more operating parameters of the can bodymaker, or of another component of a production line within which the bodymaker is located, are adjusted based on said data to mitigate the effects of the one or more tools being worn, damaged, and/or misaligned with respect to the ram.

The one or more operating parameters may comprise one or more of:
a rate of can production;
an operating temperature of the tool pack;
a rate or temperature at which coolant is supplied to the tool pack;
a rate at which lubricant is supplied to the tool pack; and
a domer position with respect to the ram axis.

The one or more operating parameters may comprise a parameter of a component of the production line upstream or downstream of the bodymaker, for example a cup press.

The method may comprise removing the can body from the punch during a return stroke of the ram using a stripper fixed to the adapter plate.

The stripper may be provided in a stripper assembly comprising a radial offset monitor, and the method further comprises obtaining output signals indicative of a position of the ram and/or punch perpendicular to the axis using the radial offset monitor and adjusting said one or more operating parameters based on the data and the output signals obtained from the radial offset monitor.

### Brief Description of the Drawings

Figure 1 illustrates schematically a perspective view of a can bodymaker;
Figure 2 is a schematic cross-sectional perspective view of a tool pack of the can bodymaker of Figure 1;
Figure 3 is another schematic cross sectional perspective view of the can bodymaker of Figure 1;
Figure 4 is a schematic perspective rear view of an adapter plate and stripper assembly;
Figure 5 is a schematic cross sectional side view of the adapter plater and stripper assembly of Figure 4;
Figure 6 is a schematic perspective front view of the adapter plater and stripper assembly of Figure 4;
Figure 7 is a schematic cross section side view of a load cell installed between the adapter plate and a bolster plate of the tool pack; and
Figure 8 is a flow diagram of a method of operating a can bodymaker to mitigate the effects of tool wear, damage and/or misalignment during production of can bodies.

### Detailed Description

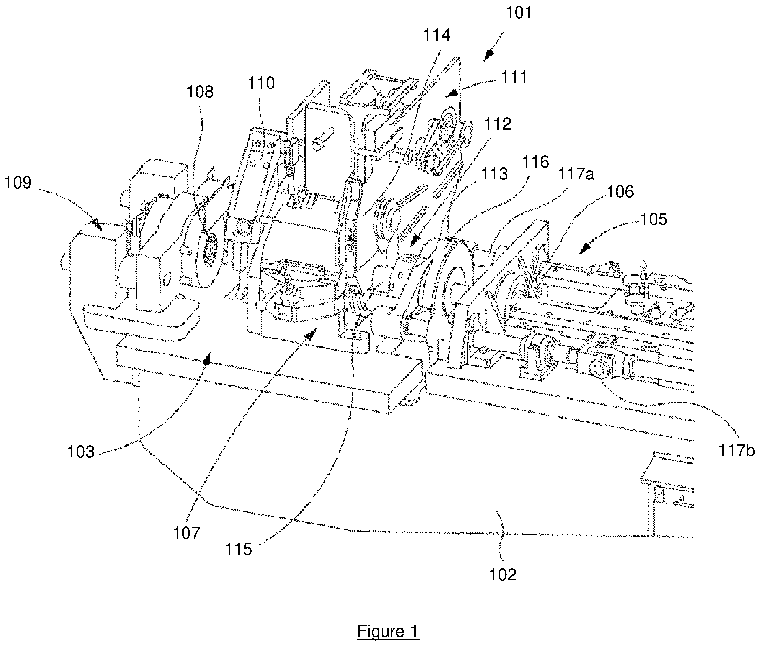

Figure 1 is a perspective schematic view of a modular bodymaker 101 for making can bodies from cups drawn from sheet metal. The bodymaker 101 comprises a base 102 which supports a machine bed 103 with a datum surface and a ram assembly 105. The ram assembly 105 comprises a reciprocating ram 106 with a punch (not shown) mounted on one end. During a forward stroke of the bodymaker 101, the punch contacts a cup (not shown) held in the path of the ram within a tool pack 107 located on the datum surface. The punch pushes the cup through a redraw die (not shown) contained within the tool pack 107 to form an elongated can body. The can body is carried on the punch to contact a bottom forming tool 108 housed by a domer module 109 so as to form a shape such as dome on the base of the can. On a return stroke of the bodymaker 101, the can body is removed from the punch by a stripper (not shown) of the tool pack 107. The can body is transported away from the ram axis by a can discharge turret 110 of an infeed-discharge module 111 located between the tool pack 107 and the domer module 109.

The tool pack 107 also comprises a redraw sleeve module 112, located in front of the redraw die (not shown) for positioning the cup during the redraw process. The redraw sleeve module 212 comprises a bearing 113 with a cup locator (not shown) to receive a cup from an infeed mechanism 114 of the infeed-discharge module 111. The bearing 113 supports a reciprocating redraw sleeve 115 that is aligned coaxially with the ram and has a central bore that allows the punch to pass therethrough. A rear end of the redraw sleeve 115 is coupled to a redraw carriage 116 that is driven in a reciprocating motion by a pair of push rods 117a, 117b located on opposite sides of the ram 106. Prior to the punch contacting the can, the redraw sleeve 115 enters the open end of the cup and forces the cup into contact with the redraw die. The redraw sleeve 115 holds the cup firmly in place against the redraw die as the punch pushes the cup through an aperture of the redraw die that is of smaller diameter than the cup. As the cup is drawn through the redraw die by the punch it reduces in diameter and its sidewall lengthens. The tool pack 107 may also contain one or more ironing dies or other tooling for forming the can body after the redraw die. The punch then carries the elongated cup away from the redraw sleeve module and through the remaining ironing dies and tooling.

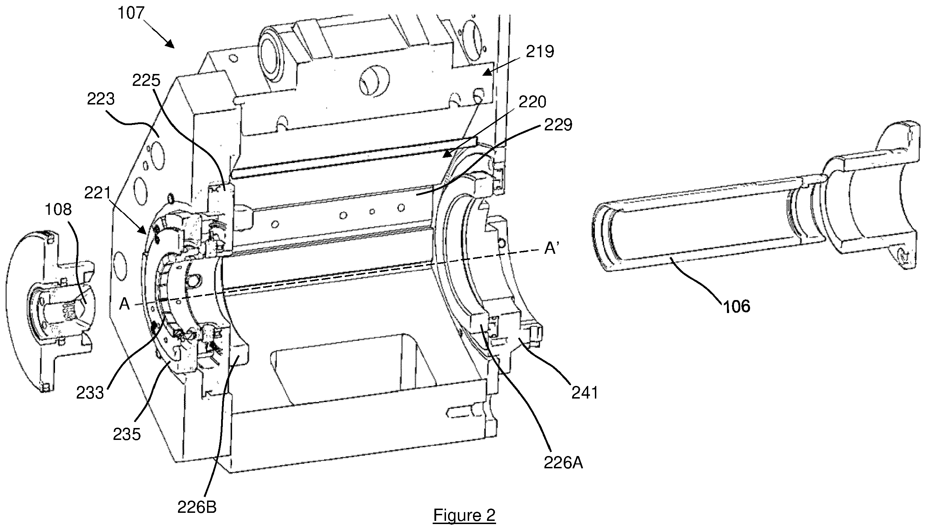

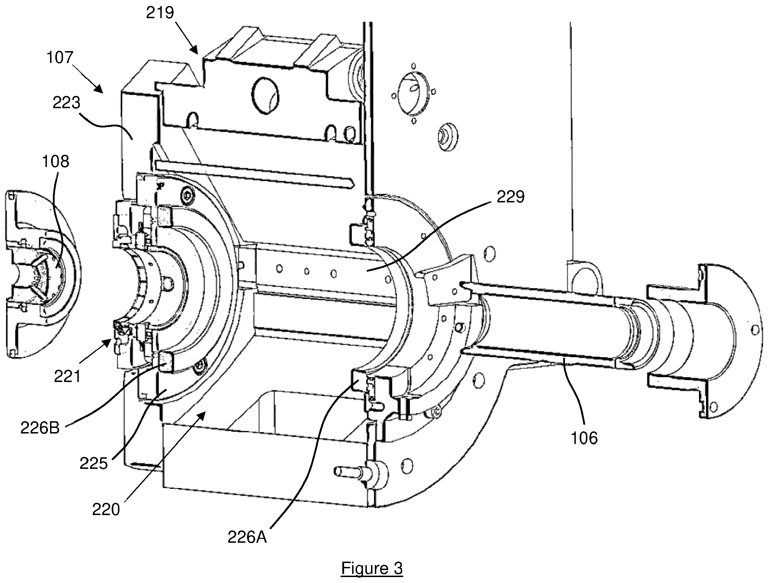

Figures 2 and 3 are sectional perspective views of the tool pack 107, which comprises a housing 219, within which a cradle 220 is provided, and a stripper assembly 221 attached to a bolster plate 223 by an adapter plate 225, the bolster plate 223 being attached to the housing 219 and providing a rear wall of the tool pack 107. The axis along which the punch (not shown) travels is shown in Figure 2 by the broken line A-A'. The cradle 220 has a cylindrical inner surface and wear bars 229 that are used to support the ironing dies (not shown) and spacer rings (226A, B) inside the housing 219. The redraw die (not shown) is mounted to the front face of the housing 219 and forms an entrance to the housing 219 into which the punch moves on the forward stroke of the ram (106).

The stripper assembly 221 comprises a stripper 233 mounted within a stripper housing 235 that is attached to the adapter plate 225. The stripper 233 comprises stripping fingers that extend radially inwards, i.e. towards the axis A-A'. On the forward stroke of the ram 106, the can body carried on the punch deflects the stripping fingers as it moves through the stripper 233. On the return stroke, i.e. away from the bottom forming tool 108, the stripping fingers prevent the can body from returning with the punch and the can body is stripped from the punch and then removed from the bodymaker 101 by the can discharge turret 210. In other embodiments not shown here, the can body may be removed from the bodymaker 101 by pressurised air (alternatively, pressurised air may be used to assist removal of the can body by a stripper).

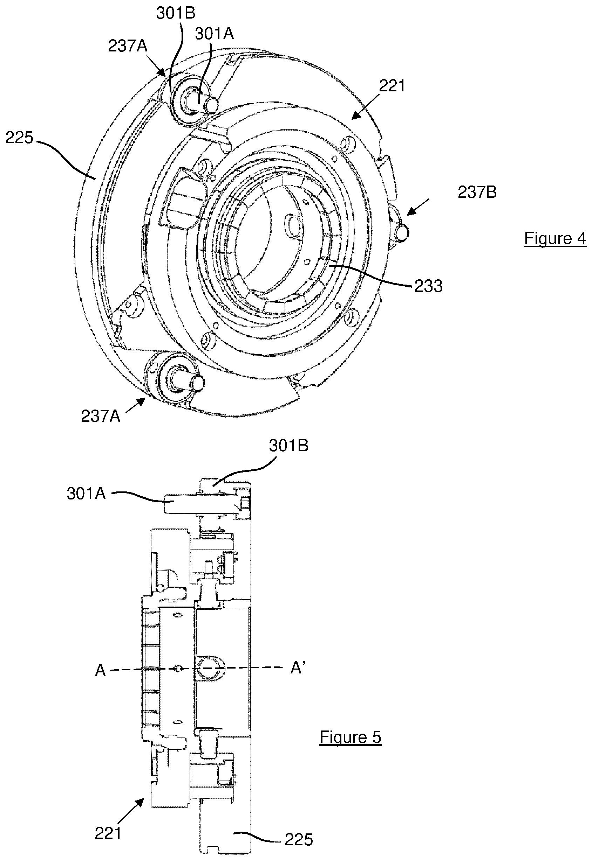

The adapter plate 225 is located between the bolster plate 223 and the toolpack housing 219. The adapter plate 225 comprises three load cells 237A-C ( see Figures 4 to 6) equally spaced around the axis A-A' and each having an axis oriented along the axis A-A' towards the cradle 220 in order to measure forces generated by passage of the punch through the dies. In this example, the load cells 237A-C are piezoelectric load cells that each generates an electrical signal when compressed along its axis (the axis preferably being aligned parallel to the axis A-A').

Figure 4 shows the rear face of the adapter plate 225 with the bolster plate 223 (and the rest of the toolpack 107) removed so that each of the three load cells 237A-C is visible.

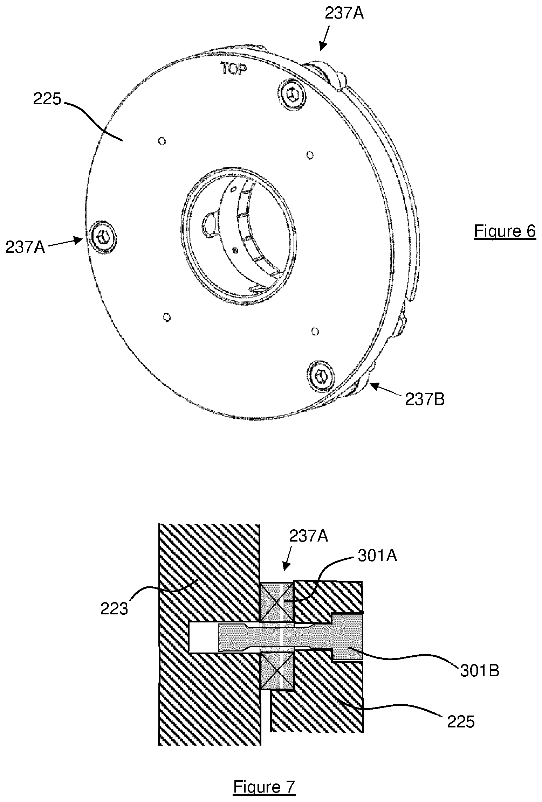

The annular body 301A of each load cell 273A-C is located in a recess formed in the edge and rear face of the adapter plate 225 (i.e. the face of the adapter plate 225 furthest from tool pack cradle 220). In this example, each recess is shaped to accommodate a wired connection to the side of the annular body 301A. The load cell 237A also comprises a preloading bolt 301B that passes through the adapter plate 225, through the centre of the annular body 301A and into the bolster plate 223. The cylindrical body 301A protrudes from the recess so that it contacts the bolster plate 223 across a small gap between the adapter plate 225 and the bolster plate 223 (see Figure 7). The preloading bolt 301B is used to bias the adapter plate 225 towards the bolster plate 223 so that the annular body 301A is held in compression between them. Application of a force to the adapter plate 225 in the direction of the bolster plate 223 causes the annular body 301A to be compressed further (i.e. the pre-loading bolt 301B does not prevent the adapter plate 225 from moving towards the bolster plate 225).

Figure 5 shows a vertical cross section through the adapter plate 225 and stripper assembly 221 along the axis A-A'.

Figure 6 shows a perspective view of the front face of the adapter plate 225 (i.e. the face closest to the toolpack cradle 220).

Figure 7 shows the adapter plate 225 bolted to the bolster plate 223 using the pre-loading bolt 301B, which passes through the cylindrical body 301A of the load cell 237A. The cylindrical body 301A in held compression between the rear face of the adapter plate 225 and the front face of the bolster plate 223.

In the particular embodiment shown in Figures 4 to 7, the stripper housing 235 comprises four eddy current sensors (although 1 or more than 4 eddy current sensors can be used) spaced around the central bore through which the ram moves, for monitoring the radial offset of the punch/ram. Radial offset data from the eddy current sensors can be correlated with the force data obtained from the load cells 237A-C. This correlation helps identify the cause of radial misalignments between the ram/punch and the toolpack components. For example, an anomalously large force arising from passage of the punch through one of the dies may be caused by the ram/punch becoming misaligned or from the die itself being misaligned; these two possibilities can be distinguished from one another using the radial offset data.

Returning to Figures 2 and 3, as the punch travels through the cradle 220 (i.e. from left to right in Figure 2), the can body is pushed through the redraw die and ironing dies, which creates a longitudinal force that is transmitted through the dies and spacer rings to the load cells 237A-C. The time-varying signals produced by the load cells 237A-C therefore provide measurements of the longitudinal forces acting on the dies as the sidewalls of the can body are being drawn and/or ironed.

The load cells 237A-C may be provided about the axis A-A' in an equiangular arrangement to provide optimal sensitivity. A minimum of three load cells 237A-C is preferred to provide sufficient spatial detail and the maximum number of load cells 237A-C is limited only by cost and the space available within the adapter plate 225. Other types of load cells 237A-C, such as capacitive load cells, can also be used instead of or in addition to piezoelectric load cells.

The adapter plate 225 may be retrofitted to existing can bodymakers without modification to the toolpack, e.g. by replacing an existing adapter plate.

As the load cells 237A-C are located outside of the cradle 220, force measurements can be made without requiring any reconfiguration or replacement of the components (tools) in the cradle 220. For example, although a fixture with the load cells 237A-C could in principle be installed in place of one of the spacer rings, this would require that the fixture to be manufactured to a high tolerance and multiple versions of the fixture may be needed depending on which dies are included in the toolpack. Such an arrangement may also adversely affect the cooling provided to the dies. Including the load cells 237A-C inside the cradle 220 may also be problematic because installing and removing components from the cradle 220 may be liable to damage the load cells 237A-C.

Although force measurements can be made with a single load cell 237A it is preferable to have more than one transducer in order to obtain information about how the forces acting on the dies are distributed spatially. For example, multiple load cells 237A-C may be used to determine that the relative alignment between the ram/punch and one or more of the dies needs correcting, e.g. using an iterative procedure in which the forces measured by each of the load cells 237A-C are compared and the alignment of the ram and/or dies varied until the forces are balanced, and/or until each of the measured forces is minimised. In practice, this procedure can be carried out by using a computer device (not shown) comprising an analogue to digital (ADC) converter to process the time-varying electrical signals generated by the load cells 237A-C and to generate a graphical display or readout of the forces that can be viewed by an operator who is making the necessary adjustments.

In some case, the computer device can be configured to detect when the forces exceed a threshold and/or whether there is an imbalance in the measured forces (e.g. one of the measured forces is greater than the others) exceeding a threshold, and respond by generating a visual or audible alarm and/or halting operation of the can bodymaker 101. The computer device may also control one or more operating parameters of the can bodymaker 101 to ensure that it operates safely and efficiently. For example, the computer device may reduce the repetition rate of the can bodymaker 101 once a problem has begun to develop.

The time-varying measurements obtained from the load cells 237A-C can be logged (e.g. stored in a database) so that gradual changes in the alignment caused by wear and vibrations can be monitored. The time resolution provided by the ADC is sufficient to resolve the temporal variation of the forces measured in the course of a single stroke. This data may be correlated with longitudinal position data for the ram over the course of each stroke (i.e. data indicative of the rams motion along the axis A-A'). This data may be obtained, for example, from a high-resolution rotary encoder that is turned by the shaft used to drive the reciprocating ram, or from a high-resolution rotary encoder that measures the longitudinal position of the ram more directly. Correlating the force measurements with the position data allows particular features in the force measurements to be attributed to passage of the ram through particular components of the toolpack, allowing e.g. a particular die to be identified as poorly aligned or damaged, or for the wear on each of the dies to be estimated from the total force on each die integrated over a large number of strokes. This analysis may be performed automatically by the computer device, which may generate a warning signal or alert indicating that one or more of the dies needs re-aligning or replacing. The stroke number may also be recorded so that the measured force data can be associated with a particular can or cans produced by the bodymaker 101, e.g. so that particular cans or batches of cans can be certified as likely to be free of defects or otherwise prevented from being shipped to customers.

It is not essential for the load cells 237A-C to be calibrated because useful information can still be obtained from the relative forces measured by each of the load cells 237A-C (e.g. to detect changes in the relative alignment of the components over time). Nevertheless, calibration of the load cells 237A-C may allow more accurate models of the forces acting on the dies to be constructed, thereby allowing more sophisticated processing of the measurements to be performed and potential problems to be detected earlier. Calibration refers here to the conversion from the electrical signal produced by the load cells 237A-C and the actual longitudinal forces acting on the toolpack components. This may involve determining a mathematical conversion function that takes the electrical signal(s) as an input and provides corresponding force(s) as an output. In some cases, this function may consist of a multiplicative factor used to scale the electrical signal by an amount. Calibration is, in general, needed for accurate measurements because the proportion of the force transmitted to the load cells 237A-C will vary according to how the adapter plate 225 is mounted and/or because the transmission of the forces from the dies may vary according to how the toolpack is configured, e.g. what "pre-load" is applied to the toolpack (see below).

To calibrate the load cells 237A-C, a fixture comprising one or more reference load cells (not shown) may be installed into the cradle 220 (e.g. in place of one of the spacer rings or ironing dies). A load is then applied to the reference load cell(s) along the axis A-A' and the electrical signals produced by the load cells 237A-C and the reference load cell(s) measured. The conversion function is then determined from the measured signals, e.g. by fitting a polynomial or spline interpolation function to the reference signals plotted against the load cell signals. The load applied to the reference load cell(s) and the load cell(s) 237A-C may be generated by the toolpack clamp 241 (see Figure 2), which provides a compressive load between the adapter plate 225 and a front wall 239 of the housing 219. A proportion of this load (referred to as a "pre-load") is applied when the bodymaker 101 is operated in order to secure the toolpack components firmly in place. Calibration of the load cells 237A-C may therefore be used to account for (i.e. compensate for) variances in the pre-load between can bodymakers. Calibration of the load cells 237A-C also allows the proportion of the longitudinal load that bypasses the load cells 237A-C through the preloading bolt 301B to be compensated.

The force measurements obtained from the load cells 237A-C during can production can be analysed using machine learning, analytics and/or artificial intelligence techniques to determine how the operation of the can bodymaker can be improved, e.g. by adjusting one or more operating parameters of the can bodymaker. For example, an evolutionary algorithm (or another type of optimisation algorithm) can be used to vary operating parameters of the can bodymaker according to a fitness metric based on the measured forces, e.g. a fitness metric that penalises the measured forces exceeding a pre-defined threshold and/or the forces measured by the load cells 237A-C differing from one another by a predefined threshold or relative proportion.

The operating parameters for the can bodymaker that are provided to the algorithm may include one or more of: the rate of can production (set speed of the can bodymaker), the operating temperature of the toolpack, the rate at which coolant is supplied to the toolpack, the rate at which lubricant is supplied to the toolpack, and the domer position (alignment) with respect to the ram axis. The algorithm may also take as an input other types of data, such as the time elapsed since the can bodymaker was last serviced or reconfigured, the number of cans produced using the current set of dies, and/or a measurement of the quality of the feedstock, such as the thickness or weight of the cups supplied to the bodymaker.

Feedback control can also be used to adjust one or more of the can bodymaker operating parameters in order to compensate for changes to the can bodymaker over time caused by wear or movement of the components in the can bodymaker. For example, a proportional-integral-derivative (PID) controller can be used to vary one or more of the can bodymaker operating parameters to minimise an error signal determined from the measured forces.

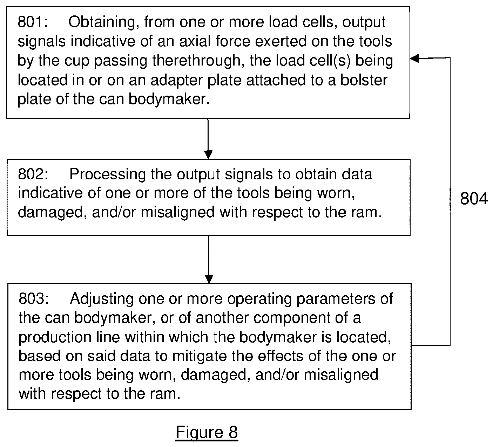

Figure 8 shows steps involved in a method of operating a can bodymaker to mitigate the effects of tool wear, damage and/or misalignment during production of can bodies, e.g. using a can bodymaker as described above. The first step 801 comprises obtaining, from one or more load cells 237A-C, output signals indicative of an axial force exerted on the tools by the cup passing therethrough, the load cell(s) being located in or on an adapter plate 225 attached to a bolster plate 223 of the can bodymaker. The output signals are then processed 802 to obtain data indicative of one or more of the tools being worn, damaged, and/or misaligned with respect to the ram 106. This may involve, for example, determining that the force exerted on the tools by the cup exceeds a threshold or that the difference or ratio of output signals obtained from two or more of the load cells differ exceeds a predetermined threshold. One or more operating parameters of the can bodymaker, or of another component of a production line within which the bodymaker is located, are adjusted 803 based on said data to mitigate the effects of the one or more tools being worn, damaged, and/or misaligned with respect to the ram 106. This process may be repeated iteratively 804 in a feedback loop, as described above.

It will be appreciated by the person of skill in the art that various modifications may be made to the above described embodiments without departing from the scope of the invention.

## Claims

1. A can bodymaker (101) for producing can bodies from cups and comprising:
a ram (106) configured to reciprocate along an axis;
a punch mounted on the ram (106);
a tool pack (107) comprising a cradle (220) and a plurality of tools located in the cradle (220) for drawing and ironing a cup mounted on the punch during a forward stroke of the ram (106);
a bolster plate (223) fixed to the can bodymaker;
an adapter plate (225) fixed to the bolster plate;
a clamping mechanism (241) for biasing said tools against a front face of the adapter plate; and
one or more load cells (237A-C) located in or on the adapter plate and configured to generate an output signal or signals indicative of an axial force exerted on the tools by the cup passing therethrough,
**characterised in that** the can bodymaker further comprises a stripper assembly (221) fixed to the adapter plate (225) for removing a can body from the punch during a return stroke of the ram (106).

2. A can bodymaker according to claim 1 and comprising an encoder configured to provide a measurement of the position of the ram (106) at one or more times during each reciprocation.

3. A can bodymaker according to claim 2, wherein the encoder is a linear encoder.

4. A can bodymaker according to claim 2, wherein the encoder is a rotary encoder configured to be turned by a shaft used to drive the ram (106).

5. A can bodymaker according to any one of the preceding claims, wherein the one or more the load cells (237A-C) are piezoelectric load cells.

6. A can bodymaker according to according to any one of the preceding claims, wherein the one or more load cells (237A-C) comprise more than one load cell, the load cells being angularly spaced apart from one another equally about the axis.

7. A can bodymaker according to any one of the preceding claims and comprising a processor configured to adjust one or more operating parameters of the bodymaker (101) in response to the output signal(s).

8. A can bodymaker according to claim 7, wherein the one or more operating parameters of the bodymaker (101) comprise as a rate of reciprocation of the ram.

9. A can bodymaker according to any of the preceding claims, wherein the adapter plate (225) is fixed to the bolster plate (223) by one or more preloading bolts (301B), each preloading bolt passing through a respective one of the load cells (237A-C) to secure the load cell between the adapter plate and the bolster plate,

10. A can bodymaker according to any one of the preceding claims, wherein the stripper assembly (221) comprises a radial offset monitor (A,B) for detecting misalignment of the ram (106) and/or punch relative to the axis.

11. A can bodymaker according to claim 10, wherein the radial offset monitor comprises a bore configured to allow passage of the punch and ram (106) therethrough and one or more eddy current sensors spaced around the bore.

12. A method of operating a can bodymaker according to any one of the preceding claims to mitigate the effects of tool wear, damage and/or misalignment during production of can bodies, each can body being formed by pushing a cup mounted on the punch of the ram reciprocating along an axis through the tools contained within the cradle of the tool pack of the can bodymaker, the method comprising:
obtaining (801), from the one or more load cells, output signals indicative of an axial force exerted on the tools by the cup passing therethrough, the load cell(s) being located in or on an adapter plate attached to the bolster plate fixed to the can bodymaker;
processing (802) the output signals to obtain data indicative of one or more of the tools being worn, damaged, and/or misaligned with respect to the ram;
adjusting (803) one or more operating parameters of the can bodymaker, or of another component of a production line within which the bodymaker is located, based on said data to mitigate the effects of the one or more tools being worn, damaged, and/or misaligned with respect to the ram.

13. A method according to claim 12, wherein the one or more operating parameters comprise one or more of:
a rate of can production;
an operating temperature of the tool pack;
a rate or temperature at which coolant is supplied to the tool pack;
a rate at which lubricant is supplied to the tool pack; and
a domer position with respect to the ram axis.

14. A method according to claim 12 or 13, wherein the one or more operating parameters comprise a parameter of a component of the production line upstream or downstream of the bodymaker.

15. A method according to any one of claims 12 to 14 and comprising removing the can body from the punch during a return stroke of the ram using the stripper fixed to the adapter plate, and
optionally, wherein the stripper is provided in a stripper assembly comprising a radial offset monitor, and the method further comprises obtaining output signals indicative of a position of the ram and/or punch perpendicular to the axis using the radial offset monitor and adjusting said one or more operating parameters based on the data and the output signals obtained from the radial offset monitor.

## Patentansprüche

1. Dosenkörperformmaschine (101) zur Herstellung von Dosenkörpern aus Bechern, umfassend:
einen Stößel (106), der so konfiguriert ist, dass er sich entlang einer Achse hin und her bewegt;
einen am Stößel (106) montierten Stempel;
ein Werkzeugsatz (107) umfassend einer Halterung (220) und einer Vielzahl von Werkzeugen, die sich in der Halterung (220) befinden, zum Ziehen und Glätten eines auf dem Stempel montierten Bechers während eines Vorwärtshubs des Stößels (106);
eine Stützplatte (223), die an der Dosenkörperformmaschine befestigt ist;
eine an der Stützplatte befestigte Adapterplatte (225);
eine Klemmvorrichtung (241) zum Vorspannen der Werkzeuge gegen eine Vorderseite der Adapterplatte; und
eine oder mehrere Kraftmessdosen (237A-C), die sich in oder auf der Adapterplatte befinden und so konfiguriert sind, dass sie ein oder mehrere Ausgangssignale erzeugen, die eine axiale Kraft angeben, die von dem hindurchfahrenden Becher auf die Werkzeuge ausgeübt wird,
**dadurch gekennzeichnet, dass** die Dosenkörperformmaschine weiter eine an der Adapterplatte (225) befestigte Abstreifanordnung (221) umfasst, die während eines Rückhubes des Stößels (106) einen Dosenkörper vom Stempel entfernt.

2. Dosenkörperformmaschine nach Anspruch 1, umfassend einen Encoder, der so konfiguriert ist, dass er eine Messung der Position des Stößels (106) zu einem oder mehreren Zeitpunkten während jeder Hin- und Herbewegung bereitstellt.

3. Dosenkörperformmaschine nach Anspruch 2, wobei der Encoder ein linearer Encoder ist.

4. Dosenkörperformmaschine nach Anspruch 2, wobei der Encoder ein Drehgeber ist, der konfiguriert ist, um von einer Welle gedreht zu werden, die zum Antrieb des Stößels (106) dient.

5. Dosenkörperformmaschine nach einem der vorstehenden Ansprüche, wobei es sich bei der einen oder mehreren Kraftmessdosen (237A-C) um piezoelektrische Kraftmessdosen handelt.

6. Dosenkörperformmaschine nach einem der vorstehenden Ansprüche, wobei die eine oder mehreren Kraftmessdosen (237A-C) mehr als eine Kraftmessdose umfassen, wobei die Kraftmessdosen in gleichem gegenseitigen Winkelabstand um die Achse angeordnet sind.

7. Dosenkörperformmaschine nach einem der vorstehenden Ansprüche, umfassend einen Prozessor, der so konfiguriert ist, dass er einen oder mehrere Betriebsparameter der Dosenkörperformmaschine (101) in Abhängigkeit vom/von den Ausgangssignal(en) anpasst.

8. Dosenkörperformmaschine nach Anspruch 7, wobei der eine oder die mehreren Betriebsparameter der Körperformmaschine (101) die Geschwindigkeit der Hin- und Herbewegung des Stößels umfassen.

9. Dosenkörperformmaschine nach einem der vorstehenden Ansprüche, wobei die Adapterplatte (225) mit einem oder mehreren Vorspannbolzen (301B) an der Stützplatte (223) befestigt ist, wobei jeder Vorspannbolzen durch eine der Kraftmessdosen (237A-C) verläuft, um die Kraftmessdose zwischen der Adapterplatte und der Stützplatte zu sichern.

10. Dosenkörperformmaschine nach einem der vorstehenden Ansprüche, wobei die Abstreifanordnung (221) einen Radialversatzmonitor (A,B) zur Erkennung einer Fehlausrichtung des Stößels (106) und/oder des Stempels relativ zur Achse umfasst.

11. Dosenkörperformmaschine nach Anspruch 10, wobei der Radialversatzmonitor eine Bohrung, die so konfiguriert ist, dass der Stempel und der Stößel (106) hindurchpassen können, sowie einen oder mehrere Wirbelstromsensoren umfasst, die um die Bohrung herum beabstandet angeordnet sind.

12. Verfahren zum Betreiben einer Dosenkörperformmaschine nach einem der vorstehenden Ansprüche zur Minderung der Auswirkungen von Werkzeugverschleiß und Beschädigung und/oder Fehlausrichtung während der Herstellung von Dosenkörpern, wobei jeder Dosenkörper durch Drücken eines auf dem Stempel des sich entlang einer Achse hin- und herbewegenden Stößels montierten Bechers durch die in der Halterung des Werkzeugsatzes der Dosenkörperformmaschine enthaltenen Werkzeuge geformt wird, wobei das Verfahren Folgendes umfasst:
Erhalten (801), von der einen oder den mehreren Kraftmessdosen, von Ausgangssignalen, die eine axiale Kraft angeben, die durch den hindurchgehenden Becher auf die Werkzeuge ausgeübt wird, wobei sich die Kraftmessdose(n) in oder auf einer Adapterplatte befinden, die an der mit dem Dosenkörperformmaschine verbundenen Stützplatte befestigt ist;
Verarbeiten (802) der Ausgangssignale, um Daten zu erhalten, die einen von dem Verschleiß, der Beschädigung und/oder der Fehlausrichtung eines oder mehrerer Werkzeuge in Bezug auf den Stößel angeben;
Anpassen (803) eines oder mehrerer Betriebsparameter der Dosenkörperformmaschine oder einer anderen Komponente einer Produktionslinie, in der sich die Körpermaschine befindet, auf der Grundlage der genannten Daten, um die Auswirkungen des Verschleißes oder der Beschädigung und/oder einer Fehlausrichtung in Bezug auf den Stößel eines oder mehrerer Werkzeuge zu mindern.

13. Verfahren nach Anspruch 12, wobei der oder die Betriebsparameter einen oder mehrere umfassen von:
einer Produktionsrate von Dosen;
einer Betriebstemperatur des Werkzeugsatzes;
einer Rate oder Temperatur, mit der dem Werkzeugsatz Kühlmittel zugeführt wird;
einer Rate, mit der dem Werkzeugsatz Schmierstoff zugeführt wird; und
die Position der Kuppel in Bezug auf die Stößel-Achse.

14. Verfahren nach Anspruch 12 oder 13, wobei der eine oder die mehreren Betriebsparameter einen Parameter einer Komponente der Produktionslinie umfassen, die der Körperformmaschine vor- oder nachgelagert ist.

15. Verfahren nach einem der Ansprüche 12 bis 14, umfassend das Entfernen des Dosenkörpers vom Stempel während eines Rückhubes des Stößels mittels des an der Adapterplatte befestigten Abstreifers, und
wobei optional der Abstreifer in einer Abstreiferanordnung mit einem Radialversatzmonitor bereitgestellt ist, und das Verfahren weiter das Erhalten von Ausgangssignalen, die eine Position des Stößels und/oder des Stemples senkrecht zur Achse mithilfe des Radialversatzmonitors angeben und das Anpassen des einen oder mehreren Betriebsparameter auf der Grundlage der Daten und der Ausgangssignale umfasst, die von dem Radialversatzmonitor erhalten wurden.

## Revendications

1. Appareil de fabrication de corps de boîte (101) pour produire des corps de boîte à partir de coupelles et comprenant :
un piston (106) configuré pour effectuer un mouvement de va-et-vient le long d'un axe ;
un poinçon monté sur le piston (106) ;
un ensemble d'outils (107) comprenant un berceau (220) et une pluralité d'outils situés dans le berceau (220) pour étirer et repasser une coupelle montée sur le poinçon lors d'une course vers l'avant du piston (106) ;
une plaque de traverse (223) fixée à l'appareil de fabrication de corps de boîte ;
une plaque d'adaptateur (225) fixée à la plaque de traverse ;
un mécanisme de serrage (241) pour solliciter lesdits outils contre une face avant de la plaque d'adaptateur ; et
une ou plusieurs cellules de charge (237A-C) situées dans ou sur la plaque d'adaptateur et configurées pour générer un ou plusieurs signaux de sortie indiquant une force axiale exercée sur les outils par la coupelle les traversant,
**caractérisé en ce que** l'appareil de fabrication de corps de boîte comprend en outre un ensemble de démoulage (221) fixé à la plaque d'adaptateur (225) pour retirer un corps de boîte du poinçon lors d'une course de retour du piston (106).

2. Appareil de fabrication de corps de boîte selon la revendication 1 et comprenant un encodeur configuré pour fournir une mesure de la position du piston (106) à un ou plusieurs moments pendant chaque mouvement de va-et-vient.

3. Appareil de fabrication de corps de boîte selon la revendication 2, dans lequel l'encodeur est un encodeur linéaire.

4. Appareil de fabrication de corps de boîte selon la revendication 2, dans lequel l'encodeur est un encodeur rotatif configuré pour être tourné par un arbre utilisé pour entraîner le piston (106).

5. Appareil de fabrication de corps de boîte selon l'une quelconque des revendications précédentes, dans lequel les une ou plusieurs cellules de charge (237A-C) sont des cellules de charge piézoélectriques.

6. Appareil de fabrication de corps de boîte selon l'une quelconque des revendications précédentes, dans lequel les une ou plusieurs cellules de charge (237A-C) comprennent plus d'une cellule de charge, les cellules de charge étant espacées angulairement les unes des autres de manière égale autour de l'axe.

7. Appareil de fabrication de corps de boîte selon l'une quelconque des revendications précédentes et comprenant un processeur configuré pour ajuster un ou plusieurs paramètres de fonctionnement de l'appareil de fabrication de corps (101) en réponse au(x) signal(s) de sortie.

8. Appareil de fabrication de corps de boîte selon la revendication 7, dans lequel les un ou plusieurs paramètres de fonctionnement de l'appareil de fabrication de corps (101) comprennent une vitesse de mouvement de va-et-vient du piston.

9. Appareil de fabrication de corps de boîte selon l'une quelconque des revendications précédentes, dans lequel la plaque d'adaptateur (225) est fixée à la plaque de traverse (223) par un ou plusieurs boulons de précharge (301B), chaque boulon de précharge passant par l'une respective des cellules de charge (237A-C) pour fixer la cellule de charge entre la plaque d'adaptateur et la plaque de traverse.

10. Appareil de fabrication de corps de boîte selon l'une quelconque des revendications précédentes, dans lequel l'ensemble de démoulage (221) comprend un moniteur de décalage radial (A, B) pour détecter le désalignement du piston (106) et/ou du poinçon par rapport à l'axe.

11. Appareil de fabrication de corps de boîte selon la revendication 10, dans lequel le moniteur de décalage radial comprend un alésage configuré pour permettre le passage du poinçon et du piston (106) à travers lui et un ou plusieurs capteurs à courants de Foucault espacés autour de l'alésage.

12. Procédé de fonctionnement d'un appareil de fabrication de corps de boîte selon l'une quelconque des revendications précédentes, visant à atténuer les effets de l'usure, de l'endommagement et/ou du désalignement des outils pendant la production de corps de boîte, chaque corps de boîte étant formé en poussant une coupelle montée sur le poinçon du piston effectuant un mouvement de va-et-vient le long d'un axe à travers les outils contenus dans le berceau de l'ensemble d'outils de l'appareil de fabrication de corps de boîte, le procédé comprenant :
l'obtention (801), à partir des une ou plusieurs cellules de charge, de signaux de sortie indiquant une force axiale exercée sur les outils par la coupelle les traversant, la(les) cellule(s) de charge étant située(s) dans ou sur une plaque d'adaptateur fixée à la plaque de traverse fixée à l'appareil de fabrication de corps de boîte ;
le traitement (802) des signaux de sortie pour obtenir des données indiquant qu'un ou plusieurs des outils sont usés, endommagés et/ou désalignés par rapport au piston ;
l'ajustement (803) d'un ou plusieurs paramètres de fonctionnement de l'appareil de fabrication de corps de boîte, ou d'un autre composant d'une ligne de production dans laquelle se trouve l'appareil de fabrication de corps de boîte, sur la base desdites données afin d'atténuer les effets de l'usure, de l'endommagement et/ou du désalignement des un ou plusieurs outils par rapport au piston.

13. Procédé selon la revendication 12, dans lequel les un ou plusieurs paramètres de fonctionnement comprennent une ou plusieurs parmi :
une vitesse de production de boîte ;
une température de fonctionnement de l'ensemble d'outils ;
une vitesse ou une température à laquelle le liquide de refroidissement est fourni à l'ensemble d'outils;
une vitesse à laquelle le lubrifiant est fourni à l'ensemble d'outils ; et
une position de bouterolle par rapport à l'axe de piston.

14. Procédé selon la revendication 12 ou 13, dans lequel les un ou plusieurs paramètres de fonctionnement comprennent un paramètre d'un composant de la ligne de production en amont ou en aval de l'appareil de fabrication de corps.

15. Procédé selon l'une quelconque des revendications 12 à 14 et comprenant le retrait du corps de boîte du poinçon lors d'une course de retour du piston à l'aide du dispositif de démoulage fixé à la plaque d'adaptateur, et
en option, dans lequel le dispositif de démoulage est prévu dans un ensemble de démoulage comprenant un moniteur de décalage radial, et le procédé comprend en outre l'obtention de signaux de sortie indiquant une position du piston et/ou du poinçon perpendiculairement à l'axe en utilisant le moniteur de décalage radial et l'ajustement desdits un ou plusieurs paramètres de fonctionnement sur la base des données et des signaux de sortie obtenus à partir du moniteur de décalage radial.
